# FASCICULE DE BREVET EUROPEEN

(11) **EP 1 466 546 B1**
(45) Date de publication et mention de la délivrance du brevet: **22.11.2006**
(21) Numéro de dépôt: 04290913.5
(22) Date de dépôt: 06.04.2004
(51) Int. Cl.: A47J 37/06

(54) **Appareil de cuisson double face à dispositif d'évacuation de vapeur**
Doppelseitige Kochvorrichtung mit Dampfauslass.
Double-sided cooking device with steam vent.

(30) Priorité: 11.04.2003 FR 0304596
(43) Date de publication de la demande: 13.10.2004
(73) Titulaire: SEB SA, 69130 Ecully (FR)
(72) Inventeur: Gruaz, Denis, 74370 Villaz (FR)
(74) Mandataire: Pichat, Thierry

(56) Documents cités:
- WO-A-02/21984
- DE-U- 9 401 578
- DE-U- 9 409 718

## Description

La présente invention concerne un appareil de cuisson double face du type comprenant deux plaques de cuisson électriques disposées face à face dans deux coques reliées l'une à l'autre par une charnière : elle s'applique notamment mais non exclusivement aux appareils de cuisson du type gaufrier ou grill-viande comportant deux plaques de chauffe qui pivotent l'une par rapport à l'autre et entre lesquelles sont disposées les aliments à cuire dans ce qu'on peut appeler une chambre de cuisson, comme montré dans WO-02/21984.

Dans tous ces types d'appareils de cuisson connus double face, l'eau contenue dans l'aliment que l'on veut faire cuire, que ce soit de la pâte pour les gaufriers ou de la viande pour les grills, tend à s'évaporer et à s'évacuer sur tous les côtés de l'appareil par l'interstice formé entre les bordures des plaques de chauffe positionnées l'une en face de l'autre, en position fermée de celles-ci pour constituer la chambre de cuisson. Du côté de la poignée, pour éviter de brûler la main de l'utilisateur, les appareils actuels comportent des orifices situés en arrière de celle-ci, dans une direction quasi-perpendiculaire au plan de fermeture des plaques de chauffe et débouchant à la surface des coques, au-dessus et/ou au-dessous de l'appareil.

La vapeur, chargée de pâte ou de jus ou autre, salit ces orifices et les bords de l'appareil ; elle y dépose dans le cas des gaufriers par exemple de la pâte mal cuite difficile ensuite à nettoyer : on peut noter à ce sujet la demande de brevet FR 247 6442 publiée le 28 août 1981 qui enseigne un dispositif de bordures, additionnelles aux plaques de chauffe et aptes, d'après les inventeurs, à éliminer le problème des boulettes de pâtes mal cuites qui collent et qui salissent lesdites bordures.

Cependant un tel dispositif ne résout pas le problème posé, et résolu par la présente invention, qui est celui de la salissure des orifices situés en arrière de la poignée et disposés pour éviter de brûler la main de l'utilisateur comme indiqué précédemment.

Une solution au problème posé, pour un appareil de cuisson double face de type connu tel que comprenant deux parties articulées l'une par rapport à l'autre selon un axe disposé le long de l'un de leurs côtés et une poignée disposée à l'opposé de cet axe d'articulation, chaque partie comprenant une plaque de chauffe ou de cuisson supportée par une enveloppe isolante, laquelle étant fixée elle-même dans une coque constituant le carénage extérieur de l'appareil, les deux dites plaques de chauffe définissant entre elles en position fermée, quand leurs bordures périphériques sont positionnées l'une en face de l'autre, une chambre de cuisson, est que ledit appareil de cuisson double face comporte au moins une rigole s'étendant entre la chambre de cuisson et la poignée et débouchant à ses extrémités à la périphérie de l'appareil, laquelle au moins rigole formant un conduit quand les plaques de chauffe sont en position fermée, apte à évacuer la vapeur s'échappant de la chambre de cuisson.

De préférence les extrémités de ce conduit débouchent sur les deux côtés latéraux de l'appareil reliant celui correspondant à la poignée et celui de l'axe d'articulation, lequel conduit étant ouvert et permettant le libre passage de l'air, de la vapeur ou de tout autre produit entre ses deux extrémités. Le résultat est que la vapeur qui s'échappe alors de la chambre de cuisson du côté de la poignée est canalisée dans ledit conduit ainsi réalisé et rejeté en dehors de la zone où se situe la poignée, préservant de la chaleur la main de l'utilisateur.

N'ayant plus besoin ainsi d'orifices traversant les coques de l'appareil on supprime le problème de leur nettoyage ; et une rigole ouverte, quand les deux coques de l'appareil le sont également, est beaucoup plus facile à nettoyer, surtout si elle est de forme demi-cylindrique de diamètre au moins de 4 mm. La section de cette rigole peut présenter des formes autres que semi-cylindriques, par exemple en 1/2 ellipse ou 1/2 octogone. Cette section présente alors une valeur minimum de 12mm2. Si désiré, la valeur de cette section de rigole peut être croissante du centre de l'appareil vers l'extérieur, créant une forme de venturi facilitant l'échappement des vapeurs.

De plus, la suppression de ces orifices d'évacuation de vapeur améliore l'esthétique de l'appareil dont les coques ne sont plus percées, et l'évacuation plus efficace de la chaleur en dehors de la zone de la poignée permet de réduire les dimensions de celle-ci en la rapprochant de la chambre de cuisson, diminuant l'encombrement d'ensemble de l'appareil sans que l'utilisateur risque de se brûler en saisissant la poignée.

On pourrait citer d'autres avantages de la présente invention mais ceux cités ci-dessus en montrent déjà suffisamment pour en prouver la nouveauté et l'intérêt. La description ci-après et les dessins ci-joints représentent un exemple de réalisation de l'invention et n'ont aucun caractère limitatif : d'autres réalisations sont possibles dans le cadre de la portée et de l'étendue de cette invention, en particulier en changeant la forme et la disposition des rigoles situées sur les deux coques de l'appareil.

La figure 1 est une vue en perspective d'un exemple d'appareil suivant l'invention en position ouverte

La figure 2 est une vue latérale en coupe partielle dans un plan proche d'un côté latéral d'un appareil suivant la figure 1 en position fermée, et perpendiculaire à l'axe d'articulation.

La figure 3 est une vue en coupe suivant le plan médian perpendiculaire à l'axe d'articulation de l'appareil en position fermée comme sur la figure 2, ladite coupe étant limitée à la partie entourant le conduit d'évacuation de vapeur, objet de la présente invention.

L'appareil de cuisson double face tel que représenté sur les figures jointes comprend d'une manière connue deux parties 14₁, 14₂ articulées l'une par rapport à l'autre selon un axe 12. Chaque partie 14 comprend :
- une plaque de chauffe 1 de cuisson
- une enveloppe 8 isolante et résistante à la chaleur, supportant la plaque de chauffe 1 et recevant une résistance électrique nécessaire à la cuisson de l'aliment considéré, mais non décrite ni spécifiquement représentée puisque n'étant pas l'objet de la présente invention, comme du reste l'ensemble des moyens d'alimentation et de commande
- une coque 4 constituant le carénage extérieur de l'appareil et qui s'articule sur l'autre coque.

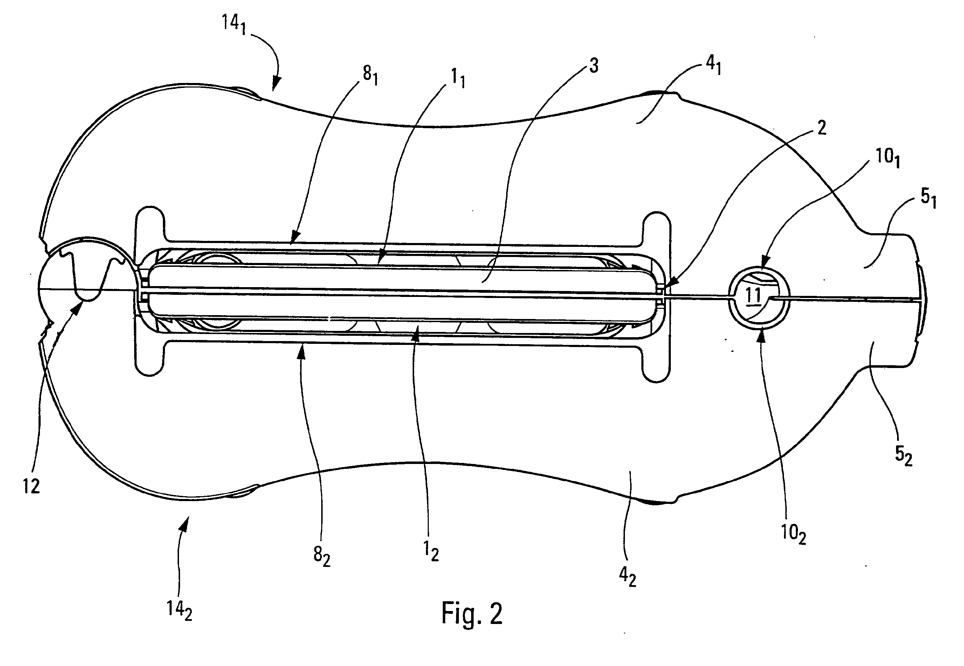

Les deux plaques de chauffe 3 définissent entre elles, en position fermée quand leurs bordures périphériques 2 sont positionnées l'une en face de l'autre comme représenté sur la figure 2, une chambre de cuisson 3.

Une poignée 5 est disposée à l'opposé de l'axe d'articulation 12 et peut être réalisée en deux demi-parties, solidaire et pouvant même être intégrée chacune dans une des deux coques 4₁ supérieure et 4₂ inférieure.

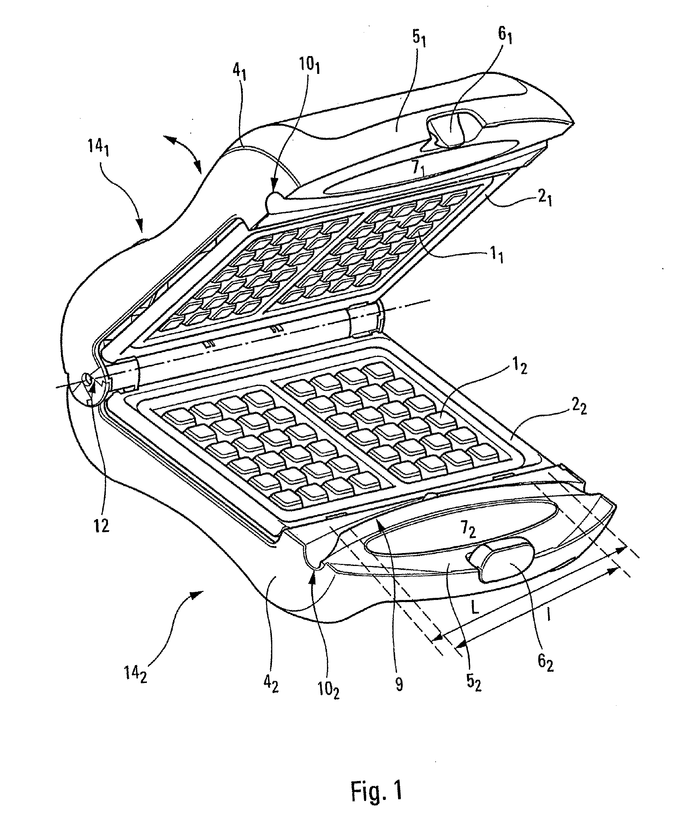

Les deux coques ou parties articulées sont maintenues en position fermée par tout système de fermeture ou moyen de verrouillage 6 dont une partie 6₂ est solidaire de la coque inférieure 4₂ et l'autre partie 6₁ est solidaire de la coque supérieure 4₁, tel que par exemple sur les parties de poignée 5 comme représenté sur la figure 1.

Selon la présente invention ledit appareil double face comporte au moins une rigole 10 s'étendant entre la chambre de cuisson 3 et la poignée 5 et débouchant à ses extrémités à la périphérie de l'appareil, laquelle au moins rigole 10 formant un conduit 11 quand les plaques de chauffe 1 sont en position fermée ; les extrémités du dit conduit débouchent de préférence sur les deux côtés opposés latéraux de l'appareil reliant celui correspondant à la poignée 5 et celui de l'axe d'articulation 12 comme représenté sur la figure 1.

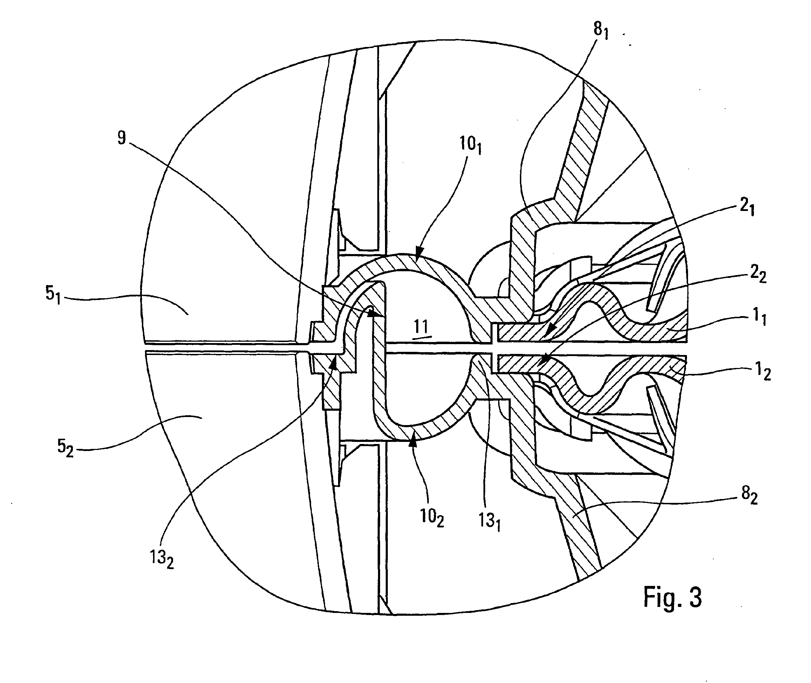

De préférence ledit conduit 11 est constitué par deux rigoles 10₁, 10₂ réalisées chacune dans une partie 14 de l'appareil et disposées l'une en vis à vis de l'autre quand les plaques de chauffe ou cuisson 1 sont en position fermée telles que représentées sur les figures 2 ou 3.

Dans d'autres modes de réalisation ledit conduit 11 pourrait être constitué d'une seule rigole 10 fermée par une surface plane de l'autre partie articulée opposée.

Le ou lesdites rigoles 10 sont réalisées respectivement, telles que représentées sur les figures jointes, dans une ou les deux enveloppes supports 8, mais elles pourraient être également réalisées respectivement dans une ou les deux plaques de chauffe 1.

Tel que représenté sur la figure 1 le conduit 11, constitué par lesdites rigoles 10, suit un profil longitudinal épousant celui de l'ouverture 7 de dégagement de la poignée 5 apte à laisser passer les doigts de l'utilisateur pour s'en saisir : tel que représenté sur la figure 1, l'ouverture 7 étant de forme ovoïde, les rigoles 10₁ et 10₂, des parties respectivement supérieure 14₁ et inférieure 14₂, sont courbes ; elles s'éloignent à leur extrémité des plaques de chauffe 1 dont elles sont les plus rapprochées à leur parties médianes, correspondant à la vue en coupe de la figure 3, alors que leurs extrémités plus éloignées correspondent à la représentation de la figure 2.

Pour améliorer l'évacuation de la vapeur pouvant s'échapper de la chambre de cuisson vers les extrémités du dit conduit 11, une rigole 10 comporte une lèvre 9 le long d'une partie au moins de son bord 13₂ situé du côté de la poignée 5 et s'étendant vers la coque opposée de celle où elle est située, au-delà du plan défini par les bords périphériques 2 des plaques de chauffe 3 en position fermée.

Une telle lèvre 9 d'une part fait écran à la vapeur pouvant s'échapper par l'interstice séparant les deux bordures 2 des plaques de chauffe et d'autre part constitue une chicane rallongeant et empêchant le cheminement de ladite vapeur qui voudrait s'infiltrer entre les deux parties de la poignée 5₁, 5₂.

Ladite lèvre 9 s'étend de préférence au moins sur une longueur L du bord 13₂ de la rigole 10 correspondant à la largeur 1 de l'ouverture de dégagement 7 de la poignée 5 tel que représentée sur la figure 1.

Lesdits bords 13 de chaque rigole 10 sont situés dans un plan parallèle à ceux définis par les bordures périphériques 2 des plaques de chauffe 3 et même de préférence dans les mêmes plans que ces dites bordures.

Par ailleurs, au niveau des bords 13₁ du conduit 11 (bords 13₁ situés du côté des plaques de cuisson 1₁, 1₂), la hauteur de passage entre les plaques de cuisson 1₁, 1₂ est comprise entre 0,5 et 2 mm, et de préférence entre 0,5 et 1,5 mm.

## Revendications

1. Appareil de cuisson double face formé par deux parties (14), articulées l'une par rapport à l'autre selon un axe (12), chaque partie comprenant une plaque de chauffe (1) supportée par une enveloppe (8), les deux plaques de chauffe (3) définissant entre elles en position fermée quand leurs bordures périphériques (2) sont positionnées l'une en face de l'autre, une chambre de cuisson (3), une poignée (5) étant disposée à l'opposée de l'axe articulation (12), **caractérisé en ce qu**'il comporte au moins une rigole (10) s'étendant entre la chambre de cuisson (3) et la poignée (5) et débouchant à ses extrémités à la périphérie de l'appareil, laquelle (au moins une) rigole (10) formant un conduit (11) quand les plaques de chauffe (1) sont en position fermée.

2. Appareil de cuisson suivant la revendication 1 **caractérisé en ce que** la ou les rigoles (10) sont réalisées respectivement dans l'une des ou les deux plaques de chauffe (1).

3. Appareil de cuisson suivant la revendication 1 **caractérisé en ce que** la ou les rigoles (10) sont réalisées respectivement dans l'une des ou les deux enveloppes supports (8).

4. Appareil de cuisson suivant l'une quelconque des revendications 1 à 3 **caractérisé en ce qu**'une rigole (10) comporte une lèvre (9) le long d'une partie au moins de son bord (13₂) situé du côté de la poignée (5) et s'étendant au-delà du plan défini par les bords périphériques (2) des plaques de chauffe (3) en position fermée.

5. Appareil de cuisson suivant la revendication 4 **caractérisé en ce que** la lèvre (9) s'étend au moins sur une longueur L du bord (13₂) de la rigole (10) correspondant à la largeur 1 de l'ouverture de dégagement (7) de la poignée (5) .

6. Appareil de cuisson suivant l'une quelconque des revendications 1 à 5 **caractérisé en ce que** le conduit (11) suit un profil épousant celui de l'ouverture (7) de dégagement de la poignée (5).

7. Appareil de cuisson suivant l'une quelconque des revendications 1 à 6 **caractérisé en ce que** les extrémités du conduit (11) débouchent sur les deux côtés latéraux de l'appareil reliant celui correspondant à la poignée (5) et celui de l'axe de l'articulation (12).

8. Appareil de cuisson suivant l'une quelconque des revendications 1 à 7 **caractérisé en ce que** les bords (13) de chaque rigole (10) sont situés dans des plans parallèles à ceux des bordures périphériques (2) des plaques de chauffe (3).

9. Appareil de cuisson suivant la revendication 8 **caractérisé en ce que** les bords (13) de chaque rigole (10) sont situés dans les mêmes plans que ceux définis par les bordures périphériques (2) des plaques de chauffe (3).

10. Appareil de cuisson suivant l'une quelconque des revendications 1 à 9 **caractérisé en ce que** la hauteur de passage entre les plaques de cuisson (1₁,1₂) au niveau des bords (13₁) du conduit (11) situés du côté des plaques de cuisson (1₁,1₂) est comprise entre 0,5 et 2 mm, et de préférence entre 0,5 et 1,5 mm.

11. Appareil de cuisson suivant l'une quelconque des revendications 1 à 10 **caractérisé en ce que** la section d'une rigole (10) est un demi-cercle ou une demi-ellipse ou un demi-octogone.

12. Appareil de cuisson suivant l'une quelconque des revendications 1 à 11 **caractérisé en ce que** la section d'une rigole (10) présente une valeur d'au moins 12mm2.

13. Appareil de cuisson suivant l'une quelconque des revendications 1 à 12 **caractérisé en ce que** la section d'une rigole (10) est croissante du centre de l'appareil vers l'extérieur, de façon à créer une forme de venturi.

14. Appareil de cuisson suivant l'une quelconque des revendications 1 à 13 **caractérisé en ce qu**'il comporte deux rigoles (10) réalisées chacune dans une partie (14) de l'appareil et disposées l'une vis à vis de l'autre quand les plaques de chauffe (1) sont en position fermée pour constituer ledit conduit (11).

15. Appareil de cuisson suivant l'une quelconque des revendications 1 à 13 **caractérisé en ce que** le conduit est constitué d'une rigole (10) fermée par une surface plane de l'autre partie articulée opposée.

## Claims

1. Double-sided cooking device formed by two parts (14), articulated on an axis (12) with respect to one another, each part comprising a heating plate (1) supported by a casing (8), the two heating plates (3) together defining, in the closed position, when their peripheral edges (2) are posited one facing the other, a cooking chamber (3), a handle (5) being arranged opposite the articulation axis (12), **characterized in that** it includes at least one channel (10) extending between the cooking chamber (3) and the handle (5) and opening out at its ends at the periphery of the device, said (at least one) channel (10) forming a conduit (11) when the heating plates (1) are in the closed position.

2. Cooking device according to Claim 1, **characterized in that** the channel or channels (10) are produced, respectively, in one or both heating plates (1).

3. Cooking device according to Claim 1, **characterized in that** the channel or channels (10) are produced, respectively, in one or both support casings (8).

4. Cooking device according to any one of Claims 1 to 3, **characterized in that** a channel (10) includes a lip (9) along at least a part of its edge (13₂) located on the handle (5) side and extending beyond the plane defined by the peripheral edges (2) of the heating plates (3) in the closed position.

5. Cooking device according to Claim 4, **characterized in that that** the lip (9) extends at least over a length L of the edge (13₂) of the channel (10) corresponding to the width 1 of the clearance opening (7) of the handle (5).

6. Cooking device according to any one of Claims 1 to 5, **characterized in that** the conduit (11) follows a profile matching that of the clearance opening (7) of the handle (5).

7. Cooking device according to any one of Claims 1 to 6, **characterized in that** the ends of the conduit (11) open out on the two lateral sides of the device connecting that which corresponds to the handle (5) and that of the axis of the articulation (12).

8. Cooking device according to any one of Claims 1 to 7, **characterized in that** the edges (13) of each channel (10) are located in planes parallel to those of the peripheral borders (2) of the heating plates (3).

9. Cooking device according to Claim 8, **characterized in that** the edges (13) of each channel (10) are located in the same planes as those defined by the peripheral borders (2) of the heating plates (3).

10. Cooking device according to any one of Claims 1 to 9, **characterized in that** the passage height between the cooking plates (1₁, 1₂) at the edges (13₁) of the conduit (11) located on the cooking plate (1₁, 1₂) side is between 0.5 and 2 mm and preferably between 0.5 and 1.5 mm.

11. Cooking device according to any one of Claims 1 to 10, **characterized in that** the cross section of a channel (10) is a semi-circle or a semi-ellipse or a semi-octagon.

12. Cooking device according to any one of Claims 1 to 11, **characterized in that** the cross section of a channel (10) has a value of at least 12 mm².

13. Cooking device according to any one of Claims 1 to 12, **characterized in that** the cross section of a channel (10) increases from the centre of the device towards the outside, so as to create a venturi shape.

14. Cooking device according to any one of Claims 1 to 13, **characterized in that** it includes two channels (10), each produced in a part (14) of the device and arranged one opposite the other when the heating plates (1) are in the closed position in order to form said conduit (11).

15. Cooking device according to any one of Claims 1 to 13, **characterized in that** the conduit is formed from a channel (10) closed by a planar surface of the other, opposite articulated part.

## Patentansprüche

1. Doppelseitiges Kochgerät bestehend aus zwei Teilen (14), die miteinander entlang einer Achse (12) gelenkig verbunden sind, wobei jedes Teil eine von einer Ummantelung (8) getragene Heizplatte (1) aufweist, wobei die beiden Heizplatten (3) zwischen sich in der geschlossenen Position, in welcher ihre Umfangskanten (2) einander gegenüberliegend positioniert sind, eine Kochkammer (3) definieren, wobei ein Griff (5) der Gelenkachse (12) gegenüberliegend angeordnet ist, **dadurch gekennzeichnet, dass** es zumindest eine Rinne (10) aufweist, die sich zwischen der Kochkammer (3) und dem Griff (5) erstreckt, und die mit ihren Enden am Umfang des Gerätes mündet, wobei die (zumindest eine) Rinne (10) eine Leitung (11) bildet, wenn sich die Heizplatten (1) in der geschlossenen Position befinden.

2. Kochgerät gemäß Anspruch 1, **dadurch gekennzeichnet, dass** die Rinne(n) (10) jeweils in der einen der beiden oder in beiden Heizplatten (1) ausgeführt sind.

3. Kochgerät gemäß Anspruch 1, **dadurch gekennzeichnet, dass** die Rinne(n) (10) jeweils in der einen der beiden oder in beiden tragenden Ummantelungen (8) ausgeführt sind.

4. Kochgerät gemäß irgendeinem der Ansprüche 1 bis 3, **dadurch gekennzeichnet, dass** eine Rinne (10) eine Lippe (9) entlang zumindest eines Teils ihrer Kante (13₂) aufweist, welche auf der Seite des Griffes (5) angeordnet ist und sich über die von den Umfangskanten (2) der Heizplatten (3) in der geschlossenen Position definierten Ebene hinaus erstreckt.

5. Kochgerät gemäß Anspruch 4, **dadurch gekennzeichnet, dass** sich die Lippe (9) zumindest über eine Länge L der Kante (13₂) der Rinne (10) erstreckt entsprechend der Breite 1 der Freigabeöffnung (7) des Griffs (5).

6. Kochgerät gemäß irgendeinem der Ansprüche 1 bis 5, **dadurch gekennzeichnet, dass** die Leitung (11) einem Profil folgt, das demjenigen der Freigabeöffnung (7) des Griffs (5) entspricht.

7. Kochgerät gemäß irgendeinem der Ansprüche 1 bis 6, **dadurch gekennzeichnet, dass** die Enden der Leitung (11) an den beiden Seitenkanten des Gerätes münden, welche diejenige, die dem Griff (5) entspricht, und diejenige der Gelenkachse (12) miteinander verbinden.

8. Kochgerät gemäß irgendeinem der Ansprüche 1 bis 7, **dadurch gekennzeichnet, dass** die Kanten (13) jeder Rinne (10) in Ebenen angeordnet sind, die parallel zu denjenigen der Umfangsränder (2) der Heizplatten (3) liegen.

9. Kochgerät gemäß Anspruch 8, **dadurch gekennzeichnet, dass** die Kanten (13) jeder Rinne (10) in den gleichen Ebenen angeordnet sind wie diejenigen, die von den Umfangsrändern (2) der Heizplatten (3) definiert sind.

10. Kochgerät gemäß irgendeinem der Ansprüche 1 bis 9, **dadurch gekennzeichnet, dass** die Durchgangshöhe zwischen den Kochplatten (1₁, 1₂) im Bereich der auf der Seite der Kochplatten (1₁, 1₂) angeordneten Kanten (13₁) der Leitung (11) zwischen 0,5 und 2 mm und vorzugsweise zwischen 0,5 und 1,5 mm beträgt.

11. Kochgerät gemäß irgendeinem der Ansprüche 1 bis 10, **dadurch gekennzeichnet, dass** der Querschnitt einer Rinne (10) ein Halbkreis oder eine halbe Ellipse oder ein halbes Achteck ist.

12. Kochgerät gemäß irgendeinem der Ansprüche 1 bis 11, **dadurch gekennzeichnet, dass** der Querschnitt einer Rinne (10) einen Wert von zumindest 12 mm² aufweist.

13. Kochgerät gemäß irgendeinem der Ansprüche 1 bis 12, **dadurch gekennzeichnet, dass** der Querschnitt einer Rinne (10) vom Mittelpunkt des Gerätes nach außen hin derart halbmondförmig ist, dass er eine Venturiform bildet.

14. Kochgerät gemäß irgendeinem der Ansprüche 1 bis 13, **dadurch gekennzeichnet, dass** es zwei Rinnen (10) aufweist, die jeweils in einem Teil (14) des Gerätes ausgeführt und einander gegenüberliegend angeordnet sind, wenn sich die Heizplatten (1) in der geschlossenen Position befinden, um die Leitung (11) zu bilden.

15. Kochgerät gemäß irgendeinem der Ansprüche 1 bis 13, **dadurch gekennzeichnet, dass** die Leitung von einer Rinne (10) gebildet ist, welche von einer ebenen Fläche des gegenüberliegenden, gelenkig angebrachten anderen Teils verschlossen ist.
